# EUROPEAN PATENT APPLICATION

(11) **EP 2 889 728 A2**
(43) Date of publication of application: **01.07.2015**
(21) Application number: 14200688.1
(22) Date of filing: 30.12.2014
(51) Int. Cl.: G06F 3/01

(54) **Systems and methods for recording and playing back point-of-view videos with haptic content**

(30) Priority: 31.12.2013 US 201361922648 P
(71) Applicant: Immersion Corporation, San Jose, CA 95134 (US)
(72) Inventor: Levesque, Vincent, Montreal, Québec H2J 2R1 (CA); Saboune, Jamal, Montreal, Québec H2W 1X9 (CA); Birnbaum, David M., Oakland, CA California 94607 (US)
(74) Representative: Beck Greener

(57) **Abstract**

A system includes a video recorder configured to record a point-of-view video of an event, a sensor configured to sense vibrations associated with the event, a processor configured to synchronize the recorded point-of-view video and the sensed vibrations, and a playback device that includes a display and a haptic output device. The playback device is configured to play back the synchronized point-of-view video and vibrations, and the haptic output device is configured to generate haptic effects based on the vibrations.

## Description

The present invention is directed to systems and methods for recording and playing back point-of-view videos with haptic content.

Electronic devices allow users to record videos that may capture both the visual and audio aspects of an event. Electronic devices may also be programmed to provide haptic sensations while the user is watching a video played on the electronic device. The haptic sensations are typically preprogrammed so that when the video is played, the user may experience haptic effects in conjunction with the video to provide a more immersive experience for the user. Existing devices only allow the haptic effects to be determined after the video has been recorded. Currently, creating haptic effects and sensations is a labor-intensive process that is not done in real time.

A new generation of electronic devices in the form of head mounted displays, such as Google Glass, allow the wearer to record visual and audio aspects of an event from his/her point-of-view and play back so-called "point-of-view" videos. The videos may be sent to others so that the viewer may play the video back on his/her own electronic device and re-live the experience as if he/she was experiencing the event first hand.

It is desirable to be able to record a point-of-view video of an event while at the same time record other real-time aspects of the event so that the real-time aspects of the event may be played back with the video as haptic sensations to provide an even more realistic and immersive experience for the viewer watching the point-of-view video and feeling haptic sensation playback.

According to an aspect of the invention, there is provided a system that includes a video recorder configured to record a point-of-view video of an event, a sensor configured to sense vibrations associated with the event, a processor configured to synchronize the recorded point-of-view video and the sensed vibrations, and a playback device that includes a display and a haptic output device. The playback device is configured to play back the synchronized point-of-view video and vibrations, and the haptic output device is configured to generate haptic effects based on the vibrations.

According to a first aspect of the present invention, there is provided a system comprising: a video recorder configured to record a point-of-view video of an event; a sensor configured to sense vibrations associated with the event; a processor configured to synchronize the recorded point-of-view video and the sensed vibrations; and a playback device comprising a display and a haptic output device, the playback device being configured to play back the synchronized point-of-view video and vibrations, and the haptic output device being configured to generate haptic effects based on the vibrations.

In an embodiment, the video recorder and the sensor are part of a first electronic device. In an embodiment, the first electronic device is a head mounted display device. In an embodiment, the processor and the playback device are also part of the head mounted display device. In an embodiment, the playback device is a second electronic device separate from and in wireless communication with the first electronic device. In an embodiment, the second electronic device is a head mounted display device.

In an embodiment, the point-of-view video comprises a training video.

According to a second aspect of the invention, there is provided a method comprising recording a point-of-view video of an event with a video recorder, sensing vibrations associated with the event with a sensor while recording the point-of-view video, synchronizing the recorded point-of-view video and the sensed vibrations, and playing back the synchronized point-of-view video and vibrations with a playback device comprising a display and a haptic output device, wherein the haptic output device generates haptic effects based on the vibrations.

In an embodiment, the point-of-view video comprises a training video.

In an embodiment, the method further includes communicating the synchronized point-of-view video and vibrations to the playback device. In an embodiment, the communicating is completed wirelessly. In an embodiment, the communicating is at least partially completed over the Internet.

According to a third aspect of the invention, there is provided a system comprising a sensor configured to sense vibrations associated with an event experienced by a user of the system, and a haptic output device configured to generate haptic effects based on the vibrations and output the haptic effects to the user as the user is experiencing the event.

According to a fourth aspect of the invention, there is provided a method comprising sensing vibrations associated with an event with a sensor carried by a user experiencing the event, generating haptic effects based on the vibrations with a haptic output device, and outputting the haptic effects to the user as the user is experiencing the event.

These and other aspects, features, and characteristics of the present invention, as well as the methods of operation and functions of the related elements of structure and the combination of parts and economies of manufacture, will become more apparent upon consideration of the following description and the appended claims with reference to the accompanying drawings, all of which form a part of this specification. It is to be expressly understood, however, that the drawings are for the purpose of illustration and description only and are not intended as a definition of the limits of the invention. As used in the specification and in the claims, the singular form of "a", "an", and "the" include plural referents unless the context clearly dictates otherwise.

The components of the following Figures are illustrated to emphasize the general principles of the present disclosure and are not necessarily drawn to scale. Reference characters designating corresponding components are repeated as necessary throughout the Figures for the sake of consistency and clarity.

Embodiments of the present invention will now be described in detail with reference to the accompanying drawings, in which:
Figure 1 illustrates a system in accordance with embodiments of the invention;
Figure 2 illustrates a method in accordance with embodiments of the invention;
Figure 3 illustrates an implementation of the system of Figure 1 in accordance with an embodiment of the invention;
Figure 4 illustrates an implementation of the system of Figure 1 in accordance with an embodiment of the invention;
Figure 5A and 5B illustrate an implementation of the system of Figure 1 in accordance with an embodiment of the invention;
Figure 6 illustrates an implementation of the system of Figure 1 in accordance with an embodiment of the invention;
Figure 7 illustrates an implementation of the system of Figure 1 in accordance with an embodiment of the invention;
Figure 8 illustrates an implementation of the system of Figure 1 in accordance with an embodiment of the invention; and
Figure 9 illustrates an implementation of the system of Figure 1 in accordance with an embodiment of the invention.

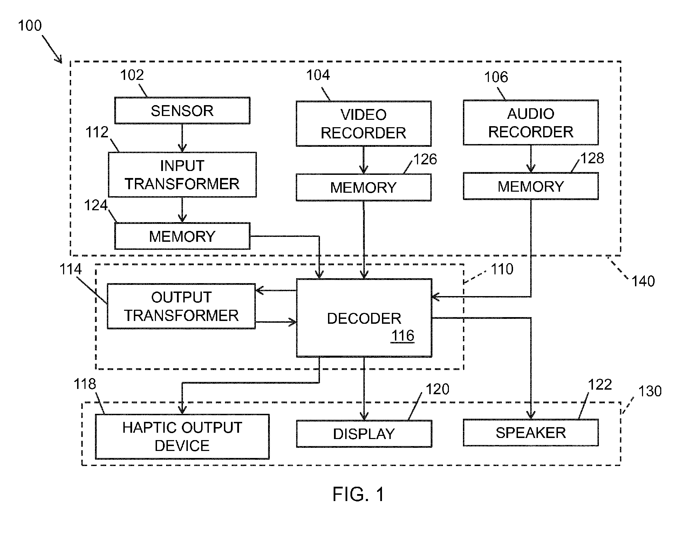

Figure 1 illustrates a system 100 in accordance with an embodiment of the invention. As illustrated, the system 100 includes one or more sensors 102, which are configured to sense vibrations experienced by a user recording an event or an object that is a subject of the event, and convert the sensed vibrations into sensor data. The system 100 also includes a video recorder 104 configured to capture and record images of the event, and an audio recorder 106 configured to capture and record sound associated with the event. In an embodiment, the sensor(s) 102, the video recorder 104, and the audio recorder 106 may be part of the same electronic device 140. In an embodiment, the video recorder 104 and the audio recorder 106 may be part of the same electronic device, and the sensor(s) 102 may be separate from the electronic device that includes the video recorder 104 and the audio recorder 106. In an embodiment in which the video recorder 104 and the audio recorder 106 are part of the same electronic device, the electronic device may be a head mounted device, such as for example, Google Glass. In an embodiment, the sensor(s) 102, the video recorder 104, and the audio recorder 106 may be separate, stand-alone devices or part of separate, stand-alone devices.

A processor 110 is configured to process signals and data output by the sensor(s) 102, the video recorder 104, and the audio recorder 106, as discussed in further detail below. The system 100 also includes an input transformer 112, an output transformer 114, which may be part of the processor 110, and a decoder 116, which may also be part of the processor 110. Aspects of the input transformer 112, the output transformer 114, and the decoder 116 are discussed in further detail below.

As illustrated in Figure 1, the system 100 also includes a haptic output device 118 configured to output haptic effects to a user of the system, a display 120 configured to display images, such as the images captured by the video recorder 104, and a speaker 122 configured to output sound, which may be the sound captured by the audio recorder 106. The haptic output device 118, the display 120, and the speaker 122 may be part of an electronic playback device 130, as discussed in further detail below. In an embodiment, the haptic output device 118, the display 120, and/or the speaker 122 may be part of a wearable device, such as a head mounted display. In an embodiment, the haptic output device 118, the display 120, and the speaker 122 may be separate devices that are configured to communicate with each other through a wireless connection, for example. In an embodiment, the haptic output device 118 may be part of a wearable device, the display 120 may be part of a television, and the speaker 122 may be a wireless speaker that is separate from the display 120.

The haptic output device 118 may include an actuator, for example, an electromagnetic actuator such as an Eccentric Rotating Mass ("ERM") in which an eccentric mass is moved by a motor, a Linear Resonant Actuator ("LRA") in which a mass attached to a spring is driven back and forth, or a "smart material" such as piezoelectric, electro-active polymers or shape memory alloys, a macro-composite fiber actuator, an electro-static actuator, an electro-tactile actuator, and/or another type of actuator that provides physical feedback such as a haptic (e.g., vibrotactile) feedback. The haptic output device 118 may include non-mechanical or non-vibratory devices such as those that use electrostatic friction (ESF), ultrasonic friction (USF), or those that induce acoustic radiation pressure with an ultrasonic haptic transducer, or those that use a haptic substrate and a flexible or deformable surface, or those that provide projected haptic output such as a puff of air using an air jet, and so on.

Electronic memory 124 may be used to store data sensed by the sensor(s) 102, electronic memory 126 may be used to store data that is recorded by the video recorder 104, and electronic memory 128 may be used to store data that is recorded by the audio recorder 106. The memory 124, 126, 128 may include one or more internally fixed storage units, removable storage units, and/or remotely accessible storage units. The various storage units may include any combination of volatile memory and nonvolatile memory. The storage units may be configured to store any combination of information, data, instructions, software code, etc. In embodiments in which the sensor(s) 102, the video recorder 104, and the audio recorder 106 are part of the same electronic device 140, the memory 124, 126, 128 may be co-located. In embodiments in which the video recorder 104 and the audio recorder 106 are part of the same electronic device, the memory 126, 128 may be co-located.

In an embodiment, a user may record video and/or audio of a scene or event using the video recorder 104 and/or the audio recorder 106. In an embodiment, the video recorder 104 and the audio recorder 106 may be part of the same recording device, such as a video camcorder, a smartphone, a head mounted recording device, etc. The video and audio that is recorded may be stored in the electronic memory 126, 128, as discussed above. In an embodiment, the sensor(s) 102 may be placed on an object of interest, such as on the user recording the event or on an article the user is in contact with as the user is recording the event. In an embodiment, the sensor(s) 102 may be placed on an object of interest in the event that is remote from the user recording the event.

As discussed above, the data generated by the sensor(s) 102 may be stored in the electronic memory 124. In addition, the data generated by the sensor(s) 102 may be transformed by the input transformer 112 prior to being stored in the electronic memory 124, as illustrated in FIG. 1. The transformation of the sensor data is considered to be an optional step and whether the transformation is needed may depend on the nature of the sensors being used. Details of embodiments of the sensor 102 are discussed in further detail below.

The decoder 116, which may be part of a media player configured to playback the video, i.e. media file, is configured to read the data generated by the sensor(s) 102 from the electronic memory 124, and associate the data temporally with the audio data and video data that were recorded and stored in the electronic memory 126, 128. During media playback, the decoder 116 may pass the sensor data through an output transformer 114 configured to transform the sensor data into a haptic output signal to generate one or more haptic effects or haptic sensory commands, which include but are not limited to, vibration, surface friction modulation, skin pinch, skin squeeze, etc. The decoder 116 may be configured to synchronize the haptic output signal that was transformed from the sensor data with the video data and the audio data so that the haptic effect is synchronized with the video and audio during playback. In an embodiment, the synchronization may be completed by ensuring that time is the same in the video data, the audio data, and the haptic effect during playback.

The processor 110 may be a general-purpose or specific-purpose processor or microcontroller for managing or controlling the operations and functions of the system 100. For example, the processor 110 may be specifically designed as an application-specific integrated circuit ("ASIC") to control output signals to the haptic output device 118 to provide haptic effects. The processor 110 may be configured to decide, based on predefined factors, what haptic effects are to be generated, the order in which the haptic effects are generated, and the magnitude, frequency, duration, and/or other parameters of the haptic effects. The processor 110 may also be configured to provide streaming commands that may be used to drive the haptic output device 118 for providing a particular haptic effect. In some embodiments, the processor 110 may actually be a plurality of processors, each configured to perform certain functions within the system 100. The processor 110 may also include memory that includes one or more storage devices that may include haptic effect profiles, instructions for how the haptic output device 118 is to be driven, and/or other information for generating haptic effects. In an embodiment in which the entire system 100 illustrated in Figure 1 is part of a single electronic device, the memory 124, 126, 128 may be part of the processor 110.

The haptic output signal may then be transmitted from the processor 110, e.g., from the decoder 116 of the processor 110, to the haptic output device 118 so that the person(s) experiencing the media through the electronic playback device 130 that includes the haptic output device 118 may more fully experience the event being played back. The electronic playback device 130 may be any device, such as an electronic handheld device, such as a mobile phone (i.e. smartphone), gaming device, personal digital assistant ("PDA"), portable e-mail device, portable Internet access device, tablet, etc. The electronic playback device 130 may include, but is not limited to, a handheld device or wearable device with the display 120, which may be a high definition display, that displays the media, and a handheld object that is capable of producing haptic sensations or effects, or an object attached to the user's body, leaning up to the user's body, or otherwise able to transmit tactile sensations and haptic effects to the user.

In an embodiment, the processor 110 and the haptic output device 118 may be part of an electronic handheld device, which may be a phone or a tablet, or a wearable device, such as a smartwatch, bracelet, necklace, headband, glasses, head mounted display, etc., and the electronic handheld device may be configured to output the video data to a separate display 120, which may be a television. In this embodiment, the user playing back the event may watch the event on a television and feel the vibrations associated with the event on the electronic handheld device.

In an embodiment, the sensor 102, the video recorder 104, the audio recorder 106, the input transformer 112, and associated memory devices 124, 126, 128 may be part of the same electronic device 140. In an embodiment, the electronic device 140 may be a head mounted display device. In an embodiment, the electronic playback device 130 may be the same device as the electronic device 140 that includes the sensor 102, the video recorder 104, and the audio recorder 106. In an embodiment, the electronic playback device 130 and the electronic device 140 may be configured to communicate with each other through a wireless connection, for example. In an embodiment, the entire system 100 illustrated in Figure 1 may be part of the same electronic device, which may be a head mounted display device.

In an embodiment, the system 100 may include a mobile phone or a wearable compact electronic device having a gyroscope, a compass, and three-axis accelerometer sensors for the sensors 102, as well as a built-in camera for the video recorder 104. In this instance, all of the components illustrated in Figure 1, including the data recording sensors 102, video recorder 104, audio recorder 106, processor 110 including the decoder 116 and output transformer 114, haptic output device 118, display 120, speaker 122, input transformer 112, and electronic memory 124, 126, may be self-contained, and the entire system 100 may be affixed to the person or a piece of equipment performing an activity of interest.

In an embodiment, a first-person perspective video camera may be mounted to a helmet or piece of equipment performing the activity of interest, and the video camera may incorporate a number of data sensors 102, such as accelerometers, a global positioning system ("GPS"), and gyroscopes, the input transformer 112, if needed, the electronic memory 124, the video recorder 104, the audio recorder 106, and the electronic memory 126. The remaining parts of the system 100, such as the processor 110 including the decoder 116 and output transformer 114, the haptic output device 118, the display 120, and the speaker 122, may be located in a separate playback device, such as the electronic playback device 130 discussed above.

In an embodiment, the sensor(s) 102, which may include one or more data sensors, such as accelerometers, laser vibrometers, GPS, etc., may be affixed either to the person or to equipment performing the activity of interest. The sensor(s) 102 may be contained in a sensor box, or some other container that is configured to protect the sensor(s) 102. The sensor box may have data recording means, such as the input transformer 112 and the electronic memory 124, built-in, or may rely on a data connection to secondary device (such as a mobile device) to record the data during the activity.

In an embodiment, the vibrations experienced by the person operating the video recorder 104 may be recorded using a sensor 102 in the form of an accelerometer that is directly or indirectly connected to the video recorder 104. The accelerometer may, for example, be integrated in the video recorder 104 or be mounted on the user's equipment, such as for example a bicycle, or on a wearable article, such as for example a bracelet. In an embodiment, the sensor 102 may be in the form of a laser vibrometer that is provided on the person experiencing the vibrations or elsewhere. In an embodiment, vibrations may also be inferred from the motion of the video image, or from the sound recorded by the audio recorder 106 along with the video. The intensity of the vibrations may, for example, be inferred from the shakiness of the recorded video. The sound may similarly be analyzed to detect noise related to vibrations, or discrete events such as impacts. In an embodiment, vibrations may be recorded through bone-conduction transducers that are sometimes used for audio output.

In an embodiment, smart filtering or transforming may be used by the processor 110 to remove noise from the vibration recording. The vibrations caused by touch input on a head mounted recording device, for example, may need to be modeled and removed from the recording if measurements are taken on the frame of the head mounted recording device. The video may be taken from different points of view, including a view from the front, back or side of the head mounted recording device, a view from a handheld camera, such as that of a smartphone, a view from a robot, such as a telepresence robot and/or a view from a remote controlled vehicle, for example.

In an embodiment, a recording session may be initiated in which the stream of sensor data is recorded alongside the video and audio data. The video recorder 104 and/or audio recorder 106 may be worn or otherwise carried by the person recording the event. The synchronization of all of the data streams containing vibration, video, and audio data may be managed by recording software, which may reside in the processor 110 of the system 100 illustrated in Figure 1.

In an embodiment, flexible container formats, such as MPEG-4, that allow for the storage of data other than video and audio in a single file container, may be used. In such an embodiment, a particular set of encoders may be used to place the sensor data into the MPEG-4 file during recording. In an embodiment, special software may be written to store the non-audio and video (A/V) sensor data in a separate file, but with special markers in the sensor data to allow for proper synchronization at playback time. In this embodiment, very little input transformation may need to be applied, beyond shaping the sensor data to conform to the limitations of the designed recording format. The exact format may be determined by the implementer. Once the person recording the event has completed his or her activity, the recording may be stopped. The MPEG-4 file may be closed, and all of the sensor data may reside in the MPEG-4 file.

In an embodiment, the playback device may be the electronic playback device 130 of Figure 1, and may be in the form of a mobile phone or tablet having the display 120, the speaker 122, and a vibration device as the haptic output device 118 to provide the haptic effect. In an embodiment, the playback device may be a gaming console connected to a television having the display 120 and the speaker 122, and also connected to a gaming peripheral, such as a gamepad, that includes the haptic output device 118 to provide the haptic effect.

Either at a later time, or concurrently with the activity being performed, one or more viewers may be interested in experiencing the activity. To play back the activity, the viewer may launch the appropriate playback software on their playback device with the objective of experiencing the performer's activity from the performer's point-of-view. In an embodiment, the playback software may include a player software application that incorporates the sensor decoding scheme performed by the decoder 116, as well as output transform software that may be run by the output transformer 114, in order to transform the sensor data into a haptic output signal suitable for the haptic output device 118 in the playback device 130. In an embodiment, a player software application may incorporate the sensor decoding scheme. The player software may rely on the output transform software being resident or otherwise pre-installed on the playback device, and such output transform software may transform the sensor data into the haptic output signal suitable for the haptic output device 118 in the playback device. In other words, the output transformer 114 and/or decoder 116 may be located on the playback device 130.

In an embodiment, a player software application may rely on the playback device's operating system software to perform the media playback, which incorporates the sensor decoding scheme. The operating system software may rely on the output transform software being resident or otherwise pre-installed on the playback device, and such output transform software may transform the sensor data into a haptic output signal suitable for the haptic output device 118 in the playback device. The viewer may then experience haptic sensations associated with the viewing of the performance, such haptic sensations being produced by the output transform software.

The video and sensor data streams may then be synchronized, merged, and transmitted to the playback device 130. The synchronization may, for example, be done by including a timestamp on every video frame and sensor measurement, keeping in mind that the capture may take place on independent devices that communicate through a wired or wireless network. The recording device may therefore need to obtain a shared time reference, for example from a GPS system. Alternatively, synchronization may be performed by performing a specific action that is detectable in both the video and the sensor data streams, such as jumping up and down three times.

The resulting data may be transmitted as a single data stream combining both vibrations and video, or as two data streams with synchronization information. The data stream may be transmitted gradually to the playback device, or stored in a file for later playback. In an embodiment, the haptic feedback may be produced offline using editing tools and added to the point-of-view video in post-production.

The point-of-view video may be played back at a later time or streamed in real time, in both cases either by one or more recipients. The video may be played back on several devices, including but not limited to: smart glasses (e.g., Google Glass), smartphones or tablets, computers, home theater systems, etc.

In an embodiment, the haptic feedback may be immediately played back to the person making the recording either to monitor the quality of the feedback or to amplify the haptic experience. The haptic feedback may similarly be produced using different haptic output devices located on a smartphone or a tablet, a wearable device, such as a head mounted display device, a smartwatch, a wristband, a ring or a glove, or a piece of furniture, such as a chair or a table.

The playback device should be capable of decoding the stream of video and vibrations, and maintaining the synchronization between the video and vibrations. A single microcontroller in the playback device 130 may, for example, control both the video display 120 and the haptic output device 118 based on the video and vibration streams.

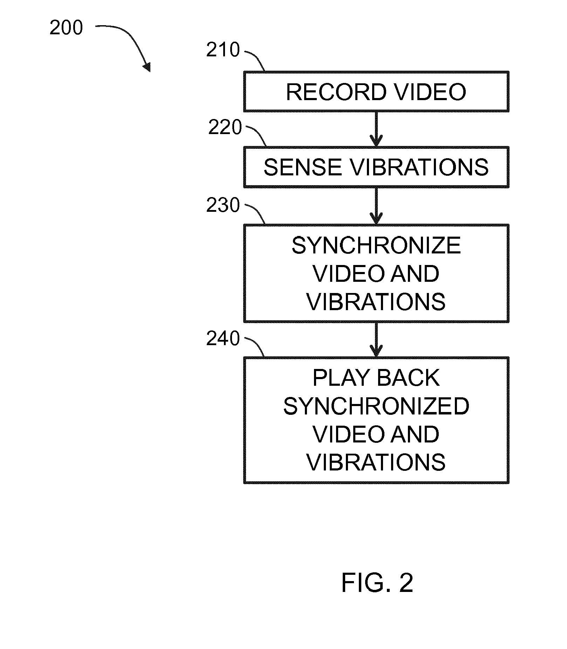

Figure 2 illustrates a method 200 in accordance with an embodiment of the invention. At 210, a video is recorded by a recording device, such as the video recorder 104 described above. At 220, vibrations are sensed by a sensor, such as the sensor 102 described above. At 230, the video and the vibrations are synchronized using a processor, such as the processor 110 described above. At 240, the synchronized video and vibrations are played back using an electronic playback device, such as the electronic playback device 130 described above that includes the display 120 and the haptic output device 118.

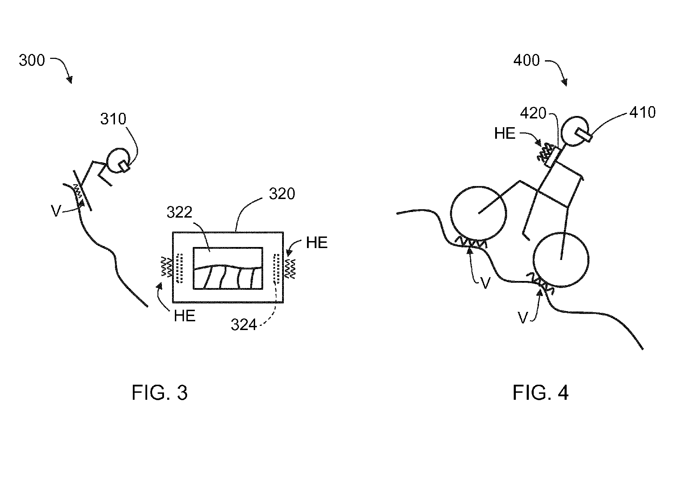

Figures 3-9 illustrate various exemplary implementations of embodiments of the system 100 described above. These implementations and embodiments are not intended to be limiting in any way.

Figure 3 illustrates an embodiment 300 of the system 100 described above in which a user is recording a point-of-view video of a stunt while snowboarding with a head mounted display device 310 that includes a video recorder and at least one vibration sensor. The user may later post the video with the embedded haptic track on the Internet so that his/her friends may watch the video on their electronic playback devices 320, such as tablets, each equipped with a display 322 and at least one haptic output device 324 so that haptic effects HE generated by the haptic output device 324 and representative of the vibrations V recorded by the user may be felt by the user's friends as if they were there with the user. The vibration sensor worn by the user allows the user's friends to feel all of the vibrations felt by the user during the stunt, especially the impact as he/she lands hard after a jump.

Figure 4 illustrates an embodiment 400 of the system 100 described above in which a user is recording a point-of-view video of a particularly rough ride as he/she is mountain biking with a head mounted display device 410. The user is also recording the vibrations V of the bike and feeling the vibrations amplified on his/her back through haptic effects HE generated by a haptic output device 420 mounted on the user's back or head mounted display device 410. The amplified vibrations created as the haptic effects HE may make the ride even more thrilling for the user.

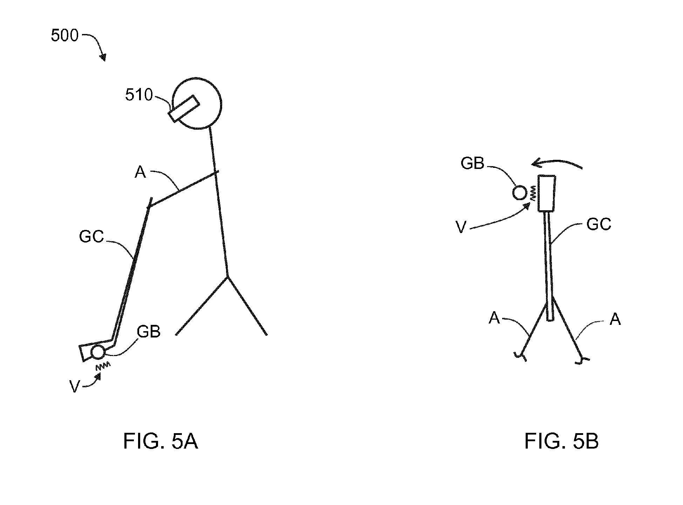

Figures 5A and 5B illustrate an embodiment 500 of the system 100 described above that is used by a user to record a point-of-view training video for golf with a head mounted display 510, from the user's perspective, so that the user may share the video with his/her students. Figure 5A is a schematic perspective view of the user wearing a head mounted display 510 and holding a gold club GC with his/her arms A extended. The vibrations V associated with striking a golf ball GB with the golf club GC are also recorded. Upon playback, the students may see the user's tips from his/her perspective, as illustrated in Figure 5B and "feel" the impact of the golf club GC with the golf ball GB. When playing back the video on their own head mounted display devices, the students may watch the video as they practice their own swings.

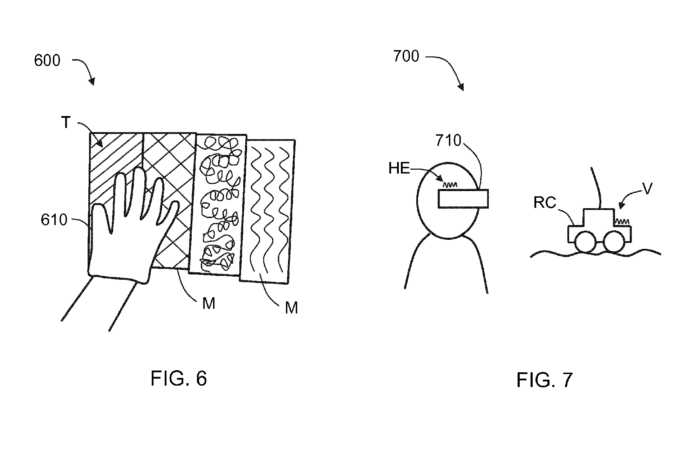

Figure 6 illustrates an embodiment 600 of the system 100 described above in which the user has a blog about industrial design in which he/she often talks about new materials M that he/she has found. The user may use a head mounted display and a special glove 610 with sensors that allow the user to record textures T and share his/her experience as he/she feels the new materials M. This allows members of the audience of the blog to feel the textures T of the new materials M on their smartphones or, in some cases, with their own gloves, provided the smartphones or gloves include haptic output devices that can play back the recorded textures T, such as through the generation of electrostatic friction or ultrasonic surface friction haptic effects.

Figure 7 illustrates an embodiment 700 of the system 100 described above in which the user interacts with a remote controlled car RC through a head mounted display device 710, which includes a video display and a haptic output device, such as the video display 120 and the haptic output device 118 described above. A point-of-view video recorder and vibration sensor may be mounted in the car RC and signals may be transmitted from the video recorder and the vibration sensor to the head mounted display device 710. This may allow the user to see from the perspective of the car RC and feel the vibrations V of the car RC as haptic effects HE generated by the haptic output device, as if he/she was inside the car RC.

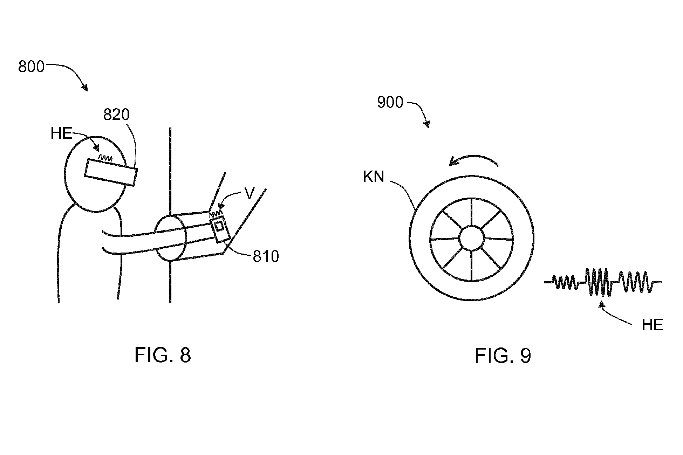

Figure 8 illustrates an embodiment 800 of the system 100 described above in which the user uses his/her smartphone 810 equipped with a camera and vibration sensor to see inside an industrial machine that he/she is repairing. The embodiment 800 depicted in Figure 8 includes a head mounted display device 820 that that may be worn by the user and configured to display the images being taken by the camera of the smartphone 810.

The head mounted display device 820 also includes a haptic output device, such as the haptic output device 118 described above. This allows the user to see from the point-of-view of the camera of the smartphone 810 and feel the vibrations V generated in the machine as the smartphone 810 bangs or brushes against the machine via haptic effects HE provided by the haptic output device.

Figure 9 illustrates an embodiment 900 of the system 100 described above that allows the user to watch an instructional video on a head mounted display device to learn how to fix a machine. As the instructor shows in the point-of-view video how to turn a knob KN until it is tight, the user can feel the sensations that he/she should try to reproduce via a haptic effect HE that is generated by a haptic output device located in the head mounted display device.

The above-described implementations of embodiments of the invention are not intended to be limiting in any way. For example, although the implementations described above may involve the sensing of vibrations, other signals that may be used as a basis of or a contributing factor to a haptic effect to be generated may be used. For example, signals based on movements of the user or an object of interest (e.g. the chest of a person expanding and contracting while breathing), vertical motion and altitude of a user or an object of interest, orientation of a user or object of interest (e.g. tilt of a skier leaning left or right in a curve), contact with or distance from the ground (e.g., jumping while skiing or biking), pressure applied by a user against an object of interest (e.g. pressure against a seat or handles of a bicycle), displacement of a component of an object of interest (e.g., chucks of a mountain bike), environmental conditions, such as temperature, wind speed, etc. The haptic effects that are generated may be based on such other signals, and any type of haptic feedback may be used to represent such signals, including but not limited to motion, force, deformation, squeezing, temperature changes, etc.

In some implementations of embodiments of the invention, the sensing may be directly mapped to an output. For example, the sensed tilt of a skier may be replicated with a motion platform. In some implementations of embodiments of the invention, the system may transform the input to in order to be output by the haptic output device. For example, pressure against a handle of a bicycle may be mapped to vibrations.

In some implementations of embodiments of the invention, the video may be recorded with a video recorder being held by a user of the system, but instead of recording an event from the user's point-of view, the video recorder may be pointed in a different direction. For example, a camera on a head mounted display may point to a different direction other than where the user is looking. A diver, for example, may have a camera pointed straight up from his/her head so that the camera points towards the water when diving. In other words, the point-of-view is not necessarily coincident with the user's eyes, but may instead be coincident with a leading part of the user's body, etc.

The embodiments described herein represent a number of possible implementations and examples and are not intended to necessarily limit the present disclosure to any specific embodiments. Instead, various modifications can be made to these embodiments as would be understood by one of ordinary skill in the art. Any such modifications are intended to be included within the scope of the present disclosure and protected by the following claims.

## Claims

1. A system comprising:
a video recorder configured to record a point-of-view video of an event;
a sensor configured to sense vibrations associated with the event;
a processor configured to synchronize the recorded point-of-view video and the sensed vibrations; and
a playback device comprising a display and a haptic output device, the playback device being configured to play back the synchronized point-of-view video and vibrations, and the haptic output device being configured to generate haptic effects based on the vibrations.

2. The system according to claim 1, wherein the video recorder and the sensor are part of a first electronic device.

3. The system according to claim 2, wherein the first electronic device is a head mounted display device.

4. The system according to claim 3, wherein the processor and the playback device are also part of the head mounted display device.

5. The system according to claim 2, wherein the playback device is a second electronic device separate from and in wireless communication with the first electronic device.

6. The system according to claim 5, wherein the second electronic device is a head mounted display device.

7. The system according to claim 1, wherein the point-of-view video comprises a training video.

8. A method comprising:
recording a point-of-view video of an event with a video recorder;
sensing vibrations associated with the event with a sensor while recording the point-of-view video;
synchronizing the recorded point-of-view video and the sensed vibrations; and
playing back the synchronized point-of-view video and vibrations with a playback device comprising a display and a haptic output device, wherein the haptic output device generates haptic effects based on the vibrations.

9. The method according to claim 8, wherein the point-of-view video comprises a training video.

10. The method according to claim 8, further comprising communicating the synchronized point-of-view video and vibrations to the playback device.

11. The method according to claim 10, wherein the communicating is completed wirelessly.

12. The method according to claim 10, wherein the communicating is at least partially completed over the Internet.

13. A system comprising:
a sensor configured to sense vibrations associated with an event experienced by a user of the system; and
a haptic output device configured to generate haptic effects based on the vibrations and output the haptic effects to the user as the user is experiencing the event.

14. A method comprising:
sensing vibrations associated with an event with a sensor carried by a user experiencing the event;
generating haptic effects based on the vibrations with a haptic output device; and
outputting the haptic effects to the user as the user is experiencing the event.
